# EUROPEAN PATENT APPLICATION

(11) **EP 4 715 923 A1**
(43) Date of publication of application: **25.03.2026**
(21) Application number: 25203206.5
(22) Date of filing: 18.09.2025
(51) Int. Cl.: H01M 10/04, H01M 10/0587, H01M 50/533

(54) **ELECTRODE ASSEMBLY AND BATTERY CELL INCLUDING THE SAME**

(30) Priority: 20.09.2024 KR 20240127356
(71) Applicant: SK On Co., Ltd., Seoul 03161 (KR)
(72) Inventor: OH, Won Je, 34124 Daejeon (KR); SON, Hye Been, 34124 Daejeon (KR); SHIN, Jae Sik, 34124 Daejeon (KR)
(74) Representative: Stolmár & Partner Patentanwälte PartG mbB

(57) **Abstract**

An electrode assembly includes a first electrode, a second electrode, and a separator located between the first electrode and the second electrode. The first electrode, the second electrode, and the separator are wound in a roll shape. The first electrode includes a first coated portion in which a first active material is coated on a first current collector, and a first uncoated portion adjacent to the first coated portion and formed at one side of the first current collector. The first uncoated portion includes a plurality of cut portions each open to an outside and a plurality of flags partitioned by the plurality of cut portions. A length of each of the plurality of cut portions increases in at least one or more sections in a radial direction from a winding center.

## Description

### BACKGROUND

### 1. Technical Field

Various non-limiting embodiments or aspects of the present disclosure generally relate to an electrode assembly and a battery cell including the same.

### 2. Technical Considerations

Secondary batteries are batteries which convert electrical energy into chemical energy and store the chemical energy so that the batteries can be reused multiple times through charging and discharging. Secondary batteries are widely used throughout the industry due to their economical and eco-friendly characteristics. For example, lithium secondary batteries are widely used in the entire industry, including portable devices that require high-density energy.

The operating principle of lithium secondary batteries is the electrochemical oxidation-reduction reaction. In other words, it is the principle that electricity is generated by the movement of lithium ions and is charged in the opposite process. In lithium secondary batteries, the phenomenon in which lithium ions from an anode escape and move to a cathode through an electrolyte and a separator is called discharging. The opposite process of the phenomenon is called charging.

A secondary battery is manufactured by assembling a plurality of components. For example, an electrode may be welded to a housing or an electrode current collector plate. The welding quality is an important factor that can determine the performance of the secondary battery. There is a need to improve the welding quality.

### SUMMARY

An example problem to be solved by non-limiting embodiments or aspects of present disclosure is to improve the welding quality of an electrode by minimizing or reducing a welding step.

In addition, another example problem to be solved by non-limiting embodiments or aspects of present disclosure is to improve the welding quality by minimizing or reducing a height difference according to the bending of an uncoated portion.

In addition, various non-limiting embodiments or aspects of the present disclosure can be widely applied in the green technology fields such as electric vehicles, battery charging stations, and other technologies using batteries such as photovoltaics and wind power.

In addition, various non-limiting embodiments or aspects of the present disclosure can also be used for eco-friendly electric vehicles and hybrid vehicles to reduce air pollution and greenhouse gas emissions to prevent or mitigate climate change.

An electrode assembly according to some non-limiting embodiments or aspects of the present disclosure includes a first electrode, a second electrode, and a separator located between the first electrode and the second electrode. The first electrode, the second electrode, and the separator are wound in a roll shape. The first electrode includes a first coated portion in which a first active material is coated on a first current collector, and a first uncoated portion adjacent to the first coated portion and formed at one side of the first current collector. The first uncoated portion includes a plurality of cut portions each open to an outside and a plurality of flags partitioned by the plurality of cut portions. A length of each of the plurality of cut portions increases in at least one or more sections in a radial direction from a winding center.

In some non-limiting embodiments or aspects, a distance from the first coated portion to one end of each of the plurality of flags may be the same in an axial direction of the winding center.

In some non-limiting embodiments or aspects, a height of an end portion of each of the plurality of flags may be the same.

In some non-limiting embodiments or aspects, the first uncoated portion may include a first region located within a preset first radius from the winding center and a second region located outside the first region. When any two cut portions are selected from among the plurality of cut portions in the first region, a length of a cut portion located close to the winding center may be the same as or shorter than a length of a cut portion located far from the winding center.

In some non-limiting embodiments or aspects, when any two cut portions are selected from among the plurality of cut portions in the second region, a length of a cut portion located close to the winding center may be the same as or longer than a length of a cut portion located far from the winding center.

In some non-limiting embodiments or aspects, a length of a cut portion located in the first region may increase as a distance from the winding center increases.

In some non-limiting embodiments or aspects, a length of a cut portion located in the second region may decrease as a distance from the winding center increases.

In some non-limiting embodiments or aspects, each of the plurality of cut portions may be formed by connecting straight lines, curved lines, or a combination thereof.

In some non-limiting embodiments or aspects, the electrode assembly may further include an insulating coated portion located between the first coated portion and the first uncoated portion.

In some non-limiting embodiments or aspects, a cutting direction of the cut portion may be inclined with respect to an axial direction of the winding center.

In some non-limiting embodiments or aspects, the cutting direction of the cut portion may be parallel to the axial direction of the winding center.

A battery cell according to some non-limiting embodiments or aspects of the present disclosure includes an electrode assembly, a can receiving the electrode assembly, and a cap plate sealing the can. The electrode assembly includes a first electrode, a second electrode, and a separator located between the first electrode and the second electrode. The first electrode, the second electrode, and the separator are wound in a roll shape. The first electrode includes a first coated portion in which a first active material is coated on a first current collector, and a first uncoated portion adjacent to the first coated portion and formed at one side of the first current collector. The first uncoated portion includes a plurality of cut portions each open to an outside and a plurality of flags partitioned by the plurality of cut portions. A length of each of the plurality of cut portions increases in at least one or more sections in a radial direction from a winding center.

An electrode assembly according to some non-limiting embodiments or aspects of the present disclosure includes a first electrode, a second electrode, and a separator located between the first electrode and the second electrode. The first electrode, the second electrode, and the separator are wound in a roll shape. The first electrode includes a first coated portion in which a first active material is coated on a first current collector, and a first uncoated portion adjacent to the first coated portion and formed at one side of the first current collector. The first uncoated portion includes a plurality of cut portions each open to an outside and a plurality of flags partitioned by the plurality of cut portions. A length of each of the plurality of cut portions of the first electrode before being wound increases in at least one or more sections in a direction from one end of the first electrode, which forms a winding center when wound, toward another end of the first electrode.

In some non-limiting embodiments or aspects, the first uncoated portion may include an inner region located within a preset threshold distance from the one end of the first electrode and an outer region located outside the inner region. When any two cut portions are selected from among the plurality of cut portions in the inner region, a length of a cut portion located close to the one end of the first electrode may be the same as or shorter than a length of a cut portion located far from the one end of the first electrode.

In some non-limiting embodiments or aspects, when any two cut portions are selected from among the plurality of cut portions in the outer region, a length of a cut portion located close to the one end of the first electrode may be the same as or longer than a length of a cut portion located far from the one end of the first electrode.

According to some non-limiting embodiments or aspects of the present disclosure, the welding quality of an electrode may be improved by minimizing or reducing a welding step.

In addition, the welding quality may be improved by minimizing or reducing a height difference due to the bending of an uncoated portion.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

FIG. 1 illustrates a battery cell according to some non-limiting embodiments or aspects of the present disclosure;
FIG. 2 illustrates an electrode according to some non-limiting embodiments or aspects of the present disclosure;
FIG. 3 illustrates an electrode assembly according to some non-limiting embodiments or aspects of the present disclosure;
FIG. 4 illustrates an electrode assembly in which an uncoated portion is bent according to some non-limiting embodiments or aspects of the present disclosure;
FIG. 5 illustrates a cross-section of an electrode assembly according to some non-limiting embodiments or aspects of the present disclosure;
FIG. 6 illustrates a first electrode according to some non-limiting embodiments or aspects of the present disclosure;
FIG. 7 is an enlarged view of region A of FIG. 6;
FIGS. 8 and 9 illustrate a first uncoated portion according to some non-limiting embodiments or aspects of the present disclosure; and
FIG. 10 is an enlarged view of region B of FIG. 6.

### DESCRIPTION

Hereinafter, specific descriptions of the present disclosure are provided with reference to the accompanying drawings. It is noted, however, that the descriptions are merely illustrative and the present disclosure is not limited to specific embodiments described in this specification.

Specific terms in this specification are merely used for convenience of illustration, and are not used to limit embodiments provided herein.

For example, expressions such as "sameness" and "same" indicate not only a state of being strictly the same, but also a state in which there is a tolerance or a difference to the extent that the same function is obtained.

For example, expressions indicating relative or absolute arrangement such as "in a direction," "along a direction," "parallel," "vertically," "centrally," "concentrically," or "coaxially" not only strictly indicate such arrangement, but also indicate a state of relative displacement with a tolerance or an angle or distance to the extent that the same function is obtained.

To explain the present disclosure, a spatial orthogonal coordinate system based on an X axis, a Y axis, and a Z axis orthogonal to each other will be described below. Each axial direction (an X-axis direction, a Y-axis direction, and a Z-axis direction) means both directions in which each axis extends.

An X direction, a Y direction, and a Z direction mentioned below are intended to explain the present disclosure such that the present disclosure can be clearly understood, and it goes without saying that each direction may be defined differently depending on where the standard is placed.

Hereinafter, the use of terms such as "first," "second," and "third" before the components mentioned below is merely intended to avoid confusion of the components to be referred to, and is not intended to indicate any order, importance, or master-slave relationship between the components. For example, some non-limiting embodiments or aspects may include only the second component without the first component.

For purposes of the description hereinafter, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects of the disclosed subject matter. Hence, specific dimensions and other physical characteristics related to the embodiments or aspects disclosed herein are not to be considered as limiting.

Some non-limiting embodiments or aspects are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

The terms used in this disclosure are for the purpose of describing specific embodiments and are not intended to limit the scope of the claims. No aspect, component, element, structure, act, step, function, instruction, and/or the like used herein should be construed as critical or essential unless explicitly described as such. As used in the descriptions of embodiments and the appended claims, singular forms in the present disclosure are intended to include plural forms as well, unless the context clearly indicates otherwise. For example, as used herein, the articles "a" and "an" are intended to include one or more items and may be used interchangeably with "one or more" and "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

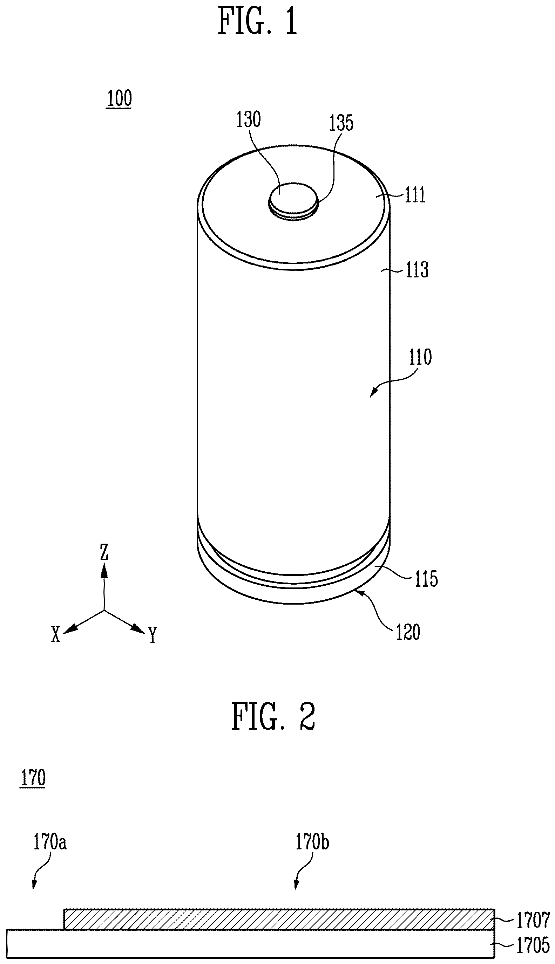

FIG. 1 illustrates a battery cell 100 according to some non-limiting embodiments or aspects of the present disclosure.

The battery cell 100 includes: an electrode assembly 160 which includes a first electrode 171, a second electrode 175, and a separator 190 located between the first electrode 171 and the second electrode 175, in which the first electrode 171, the second electrode 175, and the separator 190 are wound in a roll shape, in which the first electrode 171 includes a first coated portion 171b where a first active material is formed on a first current collector and a first uncoated portion 171a adjacent to the first coated portion 171b and formed at one side of the first current collector, in which the first uncoated portion 171a includes a plurality of cut portions 183 each open to the outside and a plurality of flags 185 partitioned by the plurality of cut portions 183, and in which the length of each of the plurality of cut portions 183 increases in at least one or more sections in a radial direction from a winding center C; a can 110 receiving the electrode assembly 160; and a cap plate 120 sealing the can 110.

In some non-limiting embodiments or aspects, the battery cell 100 may further include an electrode current collector plate electrically connected to the electrode assembly 160 between the can 110 and the electrode assembly 160. In some non-limiting embodiments or aspects, the battery cell 100 may further include an electrode terminal 130. In some non-limiting embodiments or aspects, the battery cell 100 may further include an insulating gasket 135.

The battery cell 100 described herein refers to a secondary battery which can be repeatedly used by charging and discharging electrical energy. For example, the battery cell 100 may refer to a lithium secondary battery or a lithium ion battery, but is not limited thereto. As another example, the battery cell 100 may refer to an all-solid-state battery.

The battery cell 100 may be classified into a pouch-type secondary battery, a prismatic secondary battery, or a cylindrical secondary battery depending on its shape. Referring to FIG. 1, a cylindrical secondary battery is illustrated as an example for convenience of description in this specification, but is not limited thereto.

The can 110 may receive the electrode assembly 160. The can 110 may receive the electrode current collector plate. For example, the can 110 may have a shape of a container with at least one side open. In some non-limiting embodiments or aspects, the can 110 may include materials such as various metals such as iron and aluminum, an alloy thereof, plastics, ceramics, or carbon.

In some non-limiting embodiments or aspects, the can 110 may include a flat portion 111 and a side portion 113. The flat portion 111 may extend from an upper end or a lower end of the side portion 113. The upper end or the lower end may be one of end portions in a height direction (for example, in a Z-axis direction). For example, the flat portion 111 may extend from the upper end of the side portion 113.

At least a part of the flat portion 111 may be a flat surface having no height change in a horizontal direction (for example, an X-axis direction or a Y-axis direction). The shape of the flat portion 111 with respect to the XY plane may be a circle, but is not limited thereto, and may vary into an ellipse, a triangle, a rectangle, a polygon, or the like.

The side portion 113 may extend in the height direction (for example, the Z-axis direction) from the edge of the flat portion 111. In some non-limiting embodiments or aspects, the flat portion 111 and the side portion 113 may be integrally formed or may be formed separately from each other.

In some non-limiting embodiments or aspects, the side portion 113 may include a beading portion 115. The beading portion 115 may be a part where the side portion 113 is bent toward an inner space surrounded by the side portion 113.

In some non-limiting embodiments or aspects, the can 110 may have an opening with one side open. The opening may be formed on an opposite side of the flat portion 111 in the height direction (for example, the Z-axis direction). For example, when the flat portion 111 is formed at the upper end of the side portion 113, the opening may be formed at the lower end of the side portion 113. The electrode assembly 160 and the electrode current collector plate may be inserted into the inner space of the can 110 through the opening. After the electrode assembly 160 and the electrode current collector plate are inserted into the inner space of the can 110, the beading portion 115 may be formed in one region of the side portion 113 adjacent to the opening portion.

The cap plate 120 may seal the can 110. In some non-limiting embodiments or aspects, the cap plate 120 may be coupled to the can 110 after the electrode assembly 160 and the electrode current collector plate are received in the inner space of the can 110. That is, the can 110 and the cap plate 120 may surround the outside of the electrode assembly 160 and the electrode current collector plate. In some non-limiting embodiments or aspects, the shape of the cap plate 120 and the can 110 coupled to each other may be cylindrical. However, it should be recognized that the shape of the cap plate 120 and the can 110 coupled to each other may vary into various shapes such as a prism or a hexahedron. In some non-limiting embodiments or aspects, the cap plate 120 may be located on the opposite side of the flat portion 111. For example, when the flat portion 111 is formed at the upper end of the side portion 113, the cap plate 120 may be coupled to the lower end of the side portion 113.

In some non-limiting embodiments or aspects, the electrode current collector plate may include at least one of a first electrode current collector plate or a second electrode current collector plate. The first electrode current collector plate may be arranged between the cap plate 120 and the electrode assembly 160. The second electrode current collector plate may be arranged between the flat portion 111 of the can 110 and the electrode assembly 160.

The electrode current collector plate may be electrically connected to an electrode 170 of the electrode assembly 160. The electrode current collector plate may include a conductive material such as copper, gold, silver, aluminum, or the like.

In some non-limiting embodiments or aspects, the electrode current collector plate may be circular or disc-shaped.

The electrode 170 may include the first electrode 171 and the second electrode 175. In some non-limiting embodiments or aspects, the first electrode current collector plate and the second electrode current collector plate may be electrically connected to different electrodes of the electrode 170 of the electrode assembly 160. For example, the first electrode current collector plate may be connected to the first electrode 171, and the second electrode current collector plate to the second electrode 175. In some non-limiting embodiments or aspects, the first electrode current collector plate may be electrically connected to the can 110 and/or the cap plate 120. The second electrode current collector plate may be electrically connected to the electrode terminal 130.

In some non-limiting embodiments or aspects, the electrode terminal 130 may be located on an opposite side of the cap plate 120 in the height direction (for example, the Z-axis direction). Referring to FIG. 1, the electrode terminal 130 may be located above the cap plate 120 and the cap plate 120 may be located below the electrode terminal 130 in the Z-axis direction.

The electrode terminal 130 may be electrically connected to an external device. That is, a current may flow to the external device through the electrode terminal 130.

In some non-limiting embodiments or aspects, the electrode terminal 130 may be inserted into a through hole of the can 110. In some non-limiting embodiments or aspects, the electrode terminal 130 may be a rivet. In some non-limiting embodiments or aspects, the through hole may be formed in the flat portion 111 of the can 110. For example, the through hole may be formed by penetrating the center of the flat portion 111.

In some non-limiting embodiments or aspects, the insulating gasket 135 may be arranged between the can 110 and the electrode terminal 130. For example, the insulating gasket 135 may be arranged between the flat portion 111 of the can 110 and the electrode terminal 130. For example, the insulating gasket 135 may be formed in a structure surrounding the electrode terminal 130 to prevent or mitigate the contact between the electrode terminal 130 and the can 110. The insulating gasket 135 may include an insulating material. The insulating material may include materials with low electrical conductivity, such as polymers and ceramics.

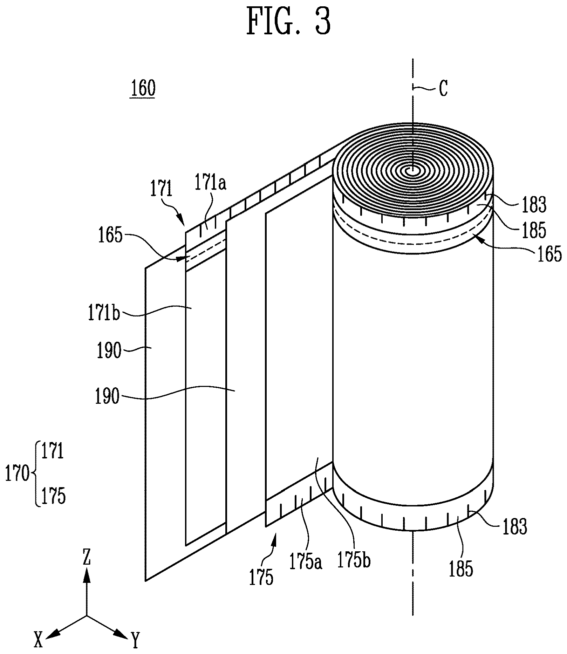

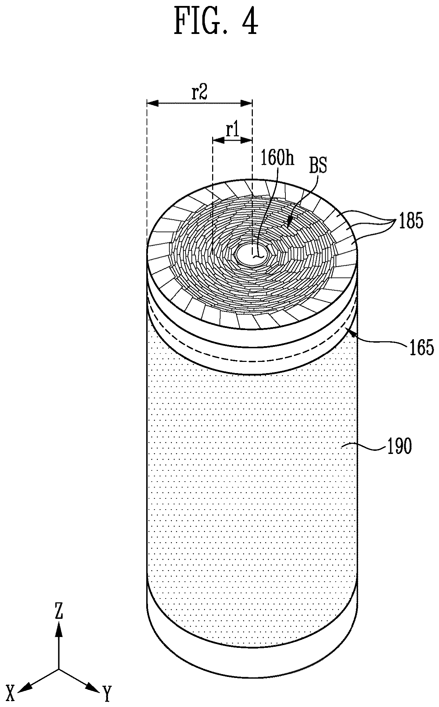

FIG. 2 illustrates an electrode according to some non-limiting embodiments or aspects of the present disclosure, FIG. 3 illustrates the electrode assembly 160 according to some non-limiting embodiments or aspects of the present disclosure, and FIG. 4 illustrates the electrode assembly 160 in which an uncoated portion 170a is bent according to some non-limiting embodiments or aspects of the present disclosure.

For example, FIG. 2 is a brief illustration of a current collector coated with an active material, FIG. 3 is a partial exploded view of the wound electrode assembly 160, and FIG. 4 is a schematic illustration of the uncoated portion 170a bent after the electrode assembly 160 is wound.

The electrode assembly 160 of the present disclosure includes the first electrode 171, the second electrode 175, and the separator 190 located between the first electrode 171 and the second electrode 175. The first electrode 171, the second electrode 175, and the separator 190 are wound in a roll shape. The first electrode 171 includes the first coated portion 171b in which the first active material is coated on a first current collector, and the first uncoated portion 171a adjacent to the first coated portion 171b and formed at one side of the first current collector. The first uncoated portion 171a includes the plurality of cut portions 183 each open to the outside, and the plurality of flags 185 partitioned by the plurality of cut portions 183. The length of each of the plurality of cut portions 183 may increase in at least one or more sections in the radial direction from the winding center C.

In some non-limiting embodiments or aspects, the electrode 170 may be a pole plate on which an active material is applied in one region. The pole plate may mean a current collector 1705. The current collector 1705 may include a conductive material to the extent that the conductive material does not cause a chemical reaction in the lithium secondary battery. For example, the current collector 1705 may include at least one of stainless steel, nickel (Ni), aluminum (Al), titanium (Ti), copper (Cu), or an alloy thereof, and may be provided in various forms such as a film, a sheet, or a foil.

In some non-limiting embodiments or aspects, the electrode 170 may include the uncoated portion 170a and a coated portion 170b. The electrode 170 may include the coated portion 170b in which an active material 1707 is coated on the current collector 1705. The electrode 170 may include the uncoated portion 170a adjacent to the coated portion 170b on the current collector 1705. That is, the uncoated portion 170a may mean a region in which the active material 1707 is not coated on the current collector 1705.

Referring to FIG. 2, in some non-limiting embodiments or aspects, the active material 1707 may be coated on at least one surface of the current collector 1705. A region coated with the active material 1707 may be the coated portion 170b, and a region not coated with the active material 1707 may be the uncoated portion 170a. In some non-limiting embodiments or aspects, the uncoated portion 170a may be formed at one side of the coated portion 170b.

Referring to FIGS. 3 and 4, in some non-limiting embodiments or aspects, the electrode assembly 160 may include the electrode 170 and the separator 190. The electrode 170 may include the first electrode 171 and the second electrode 175. The first electrode 171 and the second electrode 175 may have different polarities. For example, the first electrode 171 may be an anode and the second electrode 175 may be a cathode. In another example, the first electrode 171 may be a cathode and the second electrode 175 may be an anode. The first electrode 171 and the second electrode 175 may include components corresponding to each other.

In some non-limiting embodiments or aspects, the separator 190 may be arranged between the electrodes of the electrode 170. In some non-limiting embodiments or aspects, the separator 190 may be arranged between the first electrode 171 and the second electrode 175. As a result, the separator 190 may prevent or mitigate a short circuit between the first electrode 171 and the second electrode 175. The type of the separator 190 is not limited, but may include a porous polymer film. For example, the separator 190 may include a porous polymer film or a porous nonwoven fabric.

In some non-limiting embodiments or aspects, the electrode assembly 160 may be formed by winding the first electrode 171, the second electrode 175, and the separator 190 in a roll shape. When the first electrodes 171 and the second electrodes 175 are arranged alternately with each other, the separator 190 may be arranged between each pair of the first electrode 171 and the second electrode 175 adjacent to each other. In some non-limiting embodiments or aspects, the separator 190 may be arranged at the outermost side of the wound electrode assembly 160. A short circuit between the can 110 and the electrode 170 may be prevented or mitigated by the outermost separator 190 covering the electrode assembly 160.

In some non-limiting embodiments or aspects, the electrode assembly 160 may include a center hole 160h in the center thereof. The winding center C may mean the center hole 160h. For example, the winding center C may mean the center of the center hole 160h.

In some non-limiting embodiments or aspects, when the electrode assembly 160 is wound, one end of the first electrode 171, one end of the second electrode 175, and one end of the separator 190 may be located in the center hole 160h, respectively. In other words, in the electrode assembly 160, the first electrode 171, the second electrode 175, and the separator 190 may be wound around the center hole 160h.

In some non-limiting embodiments or aspects, the center hole 160h may have an empty interior. In some non-limiting embodiments or aspects, the center hole 160h may be hollow. In some non-limiting embodiments or aspects, the center hole 160h may extend in the Z-axis direction. In some non-limiting embodiments or aspects, after the electrode assembly 160 is received in the can 110, welding may proceed through the center hole 160h or an electrolyte may be injected through the center hole 160h.

In some non-limiting embodiments or aspects, a cross-section obtained by cutting the electrode assembly 160 in the horizontal direction (for example, an X direction or a Y direction) may have a structure in which the first electrode 171, the separator 190, the second electrode 175, the separator 190, and the first electrode 171 are alternately arranged in the radial direction from the winding center C.

In some non-limiting embodiments or aspects, the electrode 170 may further include an insulating coated portion 165 formed at a boundary between the uncoated portion 170a and the coated portion 170b. At least a part of the insulating coated portion 165 may overlap the boundary between the uncoated portion 170a and the coated portion 170b. The insulating coated portion 165 may prevent or mitigate a short circuit between two electrodes of the electrode 170 which have different polarities and are opposite to each other with the separator 190 interposed therebetween. In some non-limiting embodiments or aspects, the insulating coated portion 165 may prevent or mitigate a short circuit between the first electrode 171 and the second electrode 175.

In some non-limiting embodiments or aspects, the insulating coated portion 165 may include an insulating material. The insulating coated portion 165 may improve the mechanical rigidity of a part bent at the uncoated portion 170a to form the flag 185.

In some non-limiting embodiments or aspects, the first electrode 171 may include the first coated portion 171b in which the first active material is coated on the first current collector, and the first uncoated portion 171a adjacent to the first coated portion 171b and formed at one side of the first current collector.

In some non-limiting embodiments or aspects, the first coated portion 171b may mean a region in which the first active material is coated on the first current collector. The first active material may coat the first current collector in a preset first direction. The preset first direction may be a direction in which the long side of the first current collector extends. In some non-limiting embodiments or aspects, the first active material may coat the first current collector in the direction in which the long side of the first current collector extends.

In some non-limiting embodiments or aspects, the first uncoated portion 171a is adjacent to the first coated portion 171b and may mean a region formed on one side of the first current collector. That is, the first uncoated portion 171a may mean a region in which the first active material is not coated. In some non-limiting embodiments or aspects, the first uncoated portion 171a may be formed in the direction in which the long side of the first current collector extends. The first coated portion 171b and the first uncoated portion 171a may be formed side by side. The first uncoated portion 171a may be formed in the direction in which the long side of the first coated portion 171b extends.

As will be described below, in some non-limiting embodiments or aspects, the first uncoated portion may include the plurality of cut portions and the plurality of flags. The plurality of cut portions may be arranged in the direction in which the long side of the first coated portion extends. In addition, the plurality of flags may be arranged in the direction in which the long side of the first coated portion extends.

In some non-limiting embodiments or aspects, the width of the first coated portion 171b may be greater than or equal to the width of the first uncoated portion 171a. The width of the first coated portion 171b and the width of the first uncoated portion 171a may be measured in a direction in which the short side of the first current collector extends. In some non-limiting embodiments or aspects, the first uncoated portion 171a may be formed above the first coated portion 171b. Referring to FIG. 3, the first active material may be coated on the first current collector in the X-axis direction. The first uncoated portion 171a may be located above the first coated portion 171b in the Z-axis direction. The insulating coated portion 165 may be located between the first coated portion 171b and the first uncoated portion 171a.

In some non-limiting embodiments or aspects, at least a part of the insulating coated portion 165 may overlap the first coated portion 171b. In addition, at least a part of the insulating coated portion 165 may overlap the first uncoated portion 171a.

In some non-limiting embodiments or aspects, when the first electrode 171 is an anode, the first active material may be an anode active material. When the first electrode 171 is a cathode, the first active material may be a cathode active material. For example, the cathode active material may be a lithium metal oxide, and the anode active material may be at least one of a carbon-based material, such as crystalline carbon, amorphous carbon, carbon composite, or carbon fiber, a lithium alloy, silicon (Si), tin (Sn), or any combination thereof. When the first electrode 171 is an anode, the first current collector may be the anode current collector 1705. When the first electrode 171 is a cathode, the first current collector may be the cathode current collector 1705.

In some non-limiting embodiments or aspects, the first uncoated portion 171a may include the plurality of cut portions 183 which open to the outside and the plurality of flags 185 which are partitioned by the plurality of cut portions 183.

In some non-limiting embodiments or aspects, the plurality of cut portions 183 may each open to the outside of the first uncoated portion 171a. That is, each of the plurality of cut portions 183 may be formed by extending from the outside to the inside of the first uncoated portion 171a to cut the first uncoated portion 171a.

In some non-limiting embodiments or aspects, the first uncoated portion 171a may include an edge opposite to the first coated portion 171b. For example, the edge opposite to the first coated portion 171b among edges of the first uncoated portion 171a may overlap the first coated portion 171b in the axial direction of the winding center. The plurality of cut portions 183 may be formed at the edge of the first uncoated portion 171a opposite to the first coated portion 171b.

In some non-limiting embodiments or aspects, the plurality of cut portions 183 may be formed on an upper portion of the first uncoated portion 171a. Referring to FIG. 3, the plurality of cut portions 183 may be formed on the upper portion of the first uncoated portion 171a in the Z-axis direction.

In some non-limiting embodiments or aspects, the plurality of cut portions 183 may be arranged to be spaced apart in the first direction. The plurality of cut portions 183 may be arranged to be equally spaced from each other in the first direction. Alternatively, the distance between the plurality of cut portions 183 may increase and then decrease. Otherwise, the distance between the plurality of cut portions 183 may decrease and then increase.

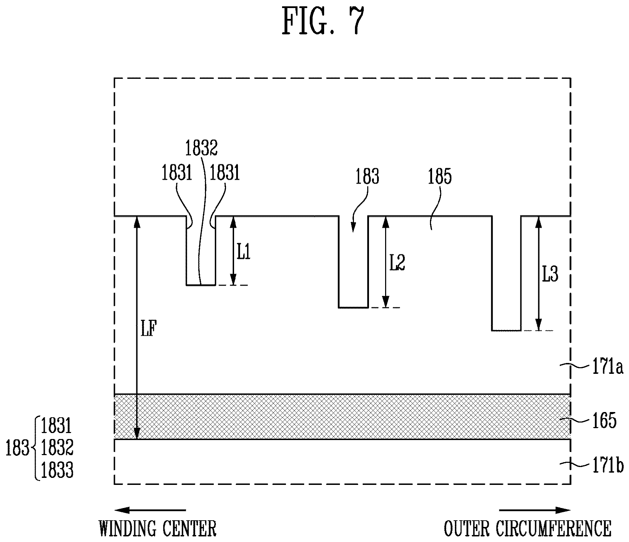

In some non-limiting embodiments or aspects, each of the plurality of cut portions 183 may be formed by connecting straight lines, curved lines, or a combination thereof. The structure of the plurality of cut portions 183 will be described in detail below with reference to FIGS. 7 to 9.

In some non-limiting embodiments or aspects, the plurality of flags 185 may be partitioned by the plurality of cut portions 183. Each of the flags 185 may be formed between two adjacent cut portions 183.

For convenience of description, a description of one flag 185 may be applied to each of the plurality of flags 185. When a part of the uncoated portion 170a is bent, the flag 185 may be defined as a region from the bent part to an end portion. In some non-limiting embodiments or aspects, when a part of the first uncoated portion 171a is bent, the flag 185 may be defined as a region from the bent part to an end portion of the first uncoated portion 171a.

In some non-limiting embodiments or aspects, the plurality of flags 185 of the uncoated portion 170a may be bent at an angle in a range of 90 degrees or less with respect to the XY plane. The plurality of flags 185 may be bent with respect to the XY plane, and an upper surface of the wound first electrode 171, second electrode 175, and separator 190 may be covered by the uncoated portion 170a.

In some non-limiting embodiments or aspects, each of the plurality of flags 185 may be bent toward the winding center C. In some non-limiting embodiments or aspects, the flag 185 may be bent inwardly toward the winding center C. However, even when the plurality of flags 185 are bent, the center hole 160h may still remain open.

In some non-limiting embodiments or aspects, the distance from the first coated portion 171b to one end of each of the plurality of flags 185 may be the same in the axial direction of the winding center C. The height of an end portion of each of the plurality of flags 185 may be the same. Referring to FIG. 3, the axial direction of the winding center C may mean a direction parallel to the Z-axis direction. The plurality of flags 185 may be formed on an upper end of the first uncoated portion 171a, and the distance from the first coated portion 171b to one end of each of the plurality of flags 185 may be the same.

For example, in some non-limiting embodiments or aspects, the distance from a boundary between the first coated portion 171b and the first uncoated portion 171a to one end of each of the plurality of flags 185 may be the same.

In some non-limiting embodiments or aspects, the insulating coated portion 165 may be formed between the first uncoated portion 171a and the first coated portion 171b. The distance from a boundary between the insulating coated portion 165 and the first coated portion 171b to one end of each of the plurality of flags 185 may be the same.

Accordingly, one surface of the electrode assembly 160 in which the first electrode 171, the second electrode 175, and the separator 190 are wound may be flat. Referring to FIG. 3, one surface of the first uncoated portion 171a facing the Z-axis direction may be flat.

Referring to FIG. 4, and in some non-limiting embodiments or aspects, the electrode assembly 160 of the present disclosure may have a bending surface BS flat even after the plurality of flags 185 are bent (or flattened). Because the bending surface BS is flat, the connection performance may be improved when connected to the electrode current collector plate (not shown).

In some non-limiting embodiments or aspects, the electrode current collector plate is arranged on the bending surface BS of the electrode assembly 160, and may be welded to each other to be connected. A gap between the electrode current collector plate and the bending surface BS is minimized or reduced, so that the electrode current collector plate is evenly in contact with and welded to the bending surface BS, thereby improving the welding quality.

In some non-limiting embodiments or aspects, the second electrode 175 may correspond to the first electrode 171. The second electrode 175 may include components corresponding to components of the first electrode 171.

In some non-limiting embodiments or aspects, the second electrode 175 may include a second coated portion 175b and a second uncoated portion 175a. The second coated portion 175b may mean a region in which a second active material is coated on a second current collector. The second uncoated portion 175a may mean a region adjacent to the second coated portion 175b and formed on one side of the second current collector.

In some non-limiting embodiments or aspects, the second uncoated portion 175a may be located below the second coated portion 175b. In some non-limiting embodiments or aspects, the second uncoated portion 175a may be located below the second coated portion 175b in the Z-axis direction.

In some non-limiting embodiments or aspects, the first uncoated portion 171a may be formed at a position opposite to the second uncoated portion 175a. For example, the first uncoated portion 171a may be positioned on an upper surface of the electrode assembly 160, and the second uncoated portion 175a may be positioned at a lower surface of the electrode assembly 160.

In some non-limiting embodiments or aspects, when the second electrode 175 is an anode, the second current collector may be the anode current collector 1705 and the second active material may be an anode active material. When the second electrode 175 is a cathode, the second current collector may be the cathode current collector 1705 and the second active material may be a cathode active material.

In some non-limiting embodiments or aspects, the second uncoated portion 175a may include the plurality of cut portions 183 each open to the outside and the plurality of flags 185 partitioned by the plurality of cut portions 183. As with the first uncoated portion 171a, the length of each of the plurality of cut portions 183 may increase in at least one or more sections of the second uncoated portion 175a in the radial direction from the winding center C. The description of the first electrode 171 may be applied to the second electrode 175. The description of the first current collector may be applied to the second current collector, the description of the first coated portion 171b may be applied to the second coated portion 175b, and the description of the first uncoated portion 171a may be applied to the second uncoated portion 175a.

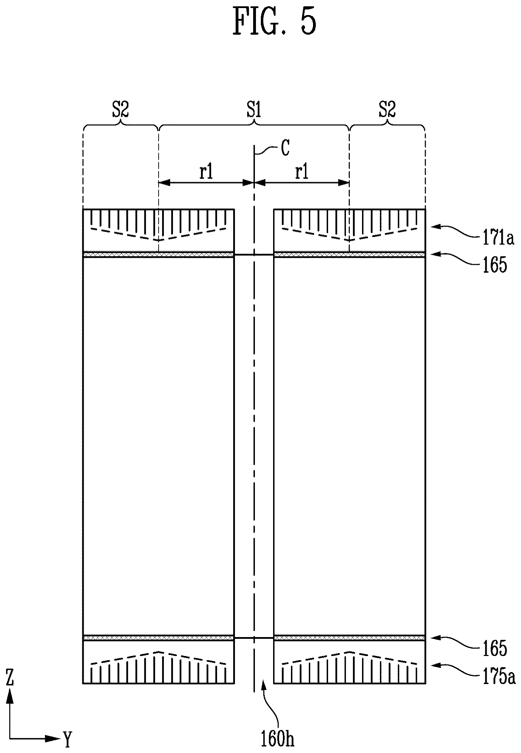

FIG. 5 illustrates a cross-section of the electrode assembly 160 according to some non-limiting embodiments or aspects of the present disclosure. For example, FIG. 5 shows a cross-section cut along the YZ plane after completely winding the electrode assembly 160 of FIG. 3.

In some non-limiting embodiments or aspects, the length of each of the plurality of cut portions 183 may increase in at least one or more sections in the radial direction from the winding center C. In some non-limiting embodiments or aspects, the length of each of the plurality of cut portions 183 may increase from the winding center C to a preset radius and then decrease thereafter.

In some non-limiting embodiments or aspects, the first uncoated portion 171a includes a first region S1 located within a preset first radius r1 from the winding center C and a second region S2 located outside the first region S1, and when any two cut portions are selected from among the plurality of cut portions 183 in the first region S1, the length of the cut portion 183 located close to the winding center C may be the same as the length of the cut portion 183 located far from the winding center C or may be shorter than the length of the cut portion 183 located far from the winding center C.

In some non-limiting embodiments or aspects, when any two cut portions are selected from among the plurality of cut portions 183 in the second region S2, the length of the cut portion 183 located close to the winding center C may be the same as the length of the cut portion 183 located far from the winding center C or may be longer than the length of the cut portion 183 located far from the winding center C.

In some non-limiting embodiments or aspects, the first uncoated portion 171a may include the first region S1 and the second region S2. The first region S1 and the second region S2 may be divided by the distance from the winding center C in the radial direction. The first region S1 may be a region located within the preset first radius r1 from the winding center C. The second region S2 may be a region extending from the outer boundary of the first region S1 to the outermost side of the electrode assembly 160. In some non-limiting embodiments or aspects, the first region S1 and the second region S2 may be formed in a concentric structure.

In some non-limiting embodiments or aspects, the preset first radius r1 may be less than or equal to the distance from the winding center C to the outermost side of the electrode assembly 160. In some non-limiting embodiments or aspects, the preset first radius r1 may fall within the range of 20 % to 90 % of the distance from the winding center C to the outermost side of the electrode assembly 160. In some non-limiting embodiments or aspects, the preset first radius r1 may be half the radius of the electrode assembly 160.

Referring to FIG. 5, and in some non-limiting embodiments or aspects, each of the plurality of cut portions 183 may be open to the outside of the uncoated portion 170a. The length of the cut portion 183 may mean the length from the outside of the uncoated portion 170a to one end of the cut portion 183. On the other hand, in FIG. 5, the dotted lines adjacent to the plurality of cut portions 183 are only shown so that a change in the length of the cut portion 183 may be easily seen.

In some non-limiting embodiments or aspects, the plurality of cut portions 183 may be located in the first region S1. The length of the cut portion 183 located close to the winding center C may be the same as the length of the cut portion 183 located far from the winding center C among the plurality of cut portions 183 located in the first region S1. In addition, the length of the cut portion 183 located close to the winding center C may be shorter than the length of the cut portion 183 located far from the winding center C among the plurality of cut portions 183 located in the first region S1.

In some non-limiting embodiments or aspects, the cut lengths of any two of the plurality of cut portions 183 may be the same. However, even in this case, the length of the cut portion 183 located close to the winding center C is not be longer than the length of the cut portion 183 located far from the winding center C.

In some non-limiting embodiments or aspects, the length of the cut portion 183 located in the first region S1 may increase as the distance from the winding center C increases.

In some non-limiting embodiments or aspects, the plurality of cut portions 183 may be located in the second region S2. The length of the cut portion 183 located close to the winding center C may be the same as the length of the cut portion 183 located far from the winding center C among the plurality of cut portions 183 located in the second region S2. In addition, the length of the cut portion 183 located close to the winding center C may be longer than the length of the cut portion 183 located far from the winding center C among the plurality of cut portions 183 located in the second region S2.

In some non-limiting embodiments or aspects, the length of the cut portion 183 located in the second region S2 may decrease as the distance from the winding center C increases.

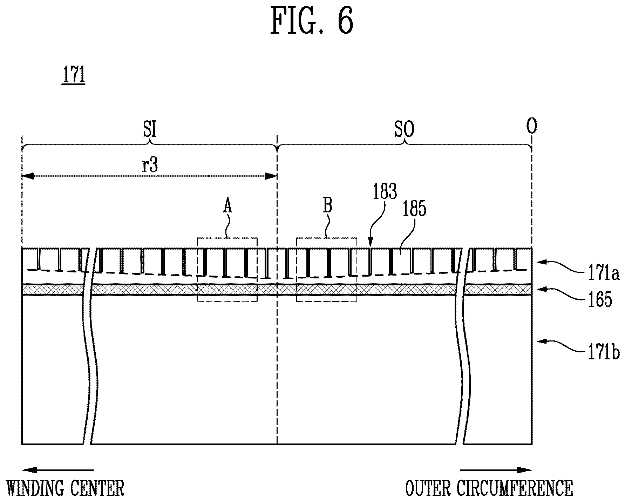

FIG. 6 illustrates the first electrode 171 according to some non-limiting embodiments or aspects of the present disclosure. For example, FIG. 6 illustrates a state of the first electrode 171 before being wound. In FIG. 6, the dotted line extending obliquely below the cut portions 183 is shown so that the change in length of the cut portions 183 may be easily seen.

In some non-limiting embodiments or aspects, the length of each of the plurality of cut portions 183 of the first electrode 171 before being wound may increase in at least one or more sections in a direction from one end of the first electrode, which forms the winding center when wound, toward the other end of the first electrode.

In some non-limiting embodiments or aspects, in the roll-shaped electrode assembly 160, the first region S1 may be formed within the preset first radius r1 in the radial direction from the winding center C, and the second region S2 may be formed outside the first region S1.

In some non-limiting embodiments or aspects, when the wound first electrode 171 is unwound, a region corresponding to the preset first radius r1 may be identified. The distance from one end of the first electrode 171 to a region corresponding to the preset first radius r1 in a direction from one end toward the other end may be defined as a threshold distance r3.

In some non-limiting embodiments or aspects, the first uncoated portion 171a may include an inner region SI located within the preset threshold distance r3 from one end of the first electrode 171 and an outer region SO located outside the inner region SI.

In some non-limiting embodiments or aspects, when the first electrode 171 is wound, the side facing the winding center C may be one end of the first electrode 171, and the side facing the outer circumference may be the other end of the first electrode 171.

In some non-limiting embodiments or aspects, the threshold distance r3 is not determined after the preset first radius r1 is determined. In some non-limiting embodiments or aspects, after the preset threshold distance r3 is determined in the first electrode 171 before being wound, the first electrode 171 is wound, and then the distance from the winding center C to the region corresponding to the preset threshold distance r3 may be determined as the first radius r1.

In some non-limiting embodiments or aspects, the threshold distance r3 may be determined with respect to the first electrode 171 before being wound, or the preset first radius r1 may be determined with respect to the first electrode 171 after being wound. In both cases, when the threshold distance r3 or the first radius r1 is determined, the corresponding first radius r1 or threshold distance r3 may be determined, respectively.

In some non-limiting embodiments or aspects, the threshold distance r3 may be half the length of the first electrode 171. The length of the edge in a direction in which the long side of the first electrode 171 extends may be the length of the first electrode 171.

Referring again to FIG. 6, in some non-limiting embodiments or aspects, in the inner region SI, the length of the cut portion 183 closer to one end of the first electrode 171 forming the winding center than the outer region SO may be less than or equal to the length of the cut portion 183 closer to the outer region SO than one end of the first electrode 171.

In some non-limiting embodiments or aspects, in the outer region SO, the length of the cut portion 183 closer to the other end of the first electrode 171 than the inner region SI may be less than or equal to the length of the cut portion 183 closer to the inner region SI than the other end of the first electrode 171.

In some non-limiting embodiments or aspects, when any two cut portions are selected from among the plurality of cut portions 183 in the inner region SI, the length of the cut portion 183 located close to one end of the first electrode 171 may be the same as the length of the cut portion 183 located far from one end of the first electrode 171 or may be shorter than the length of the cut portion 183 located far from one end of the first electrode 171.

In some non-limiting embodiments or aspects, when any two cut portions are selected from among the plurality of cut portions 183 in the outer region SO, the length of the cut portion 183 located close to one end of the first electrode 171 may be the same as the length of the cut portion 183 located far from one end of the first electrode 171 or may be longer than the length of the cut portion 183 located far from one end of the first electrode 171.

In some non-limiting embodiments or aspects, the length of the cut portion 183 located in the inner region SI may increase as the distance from the winding center C increases. In some non-limiting embodiments or aspects, the length of the cut portion 183 located in the outer region SO may decrease as the distance from the winding center C increases.

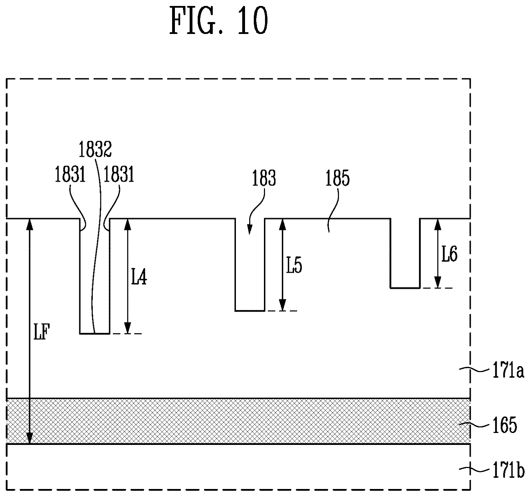

FIG. 7 is an enlarged view of region A of FIG. 6, FIGS. 8 and 9 illustrate the first uncoated portion 171a according to some non-limiting embodiments or aspects of the present disclosure, and FIG. 10 is an enlarged view of region B of FIG. 6.

In some non-limiting embodiments or aspects, the structure of the cut portion 183 will be described in detail with reference to FIGS. 7 to 9. The cutting direction of the cut portion 183 may be inclined with respect to the axial direction of the winding center C. The cutting direction of the cut portion 183 may be parallel to the axial direction of the winding center C.

Accordingly, the plurality of flags 185 may be easily bent toward the winding center C, and the welding quality may be improved.

In some non-limiting embodiments or aspects, the end portion of the first uncoated portion 171a may mean an edge opposite to the first coated portion 171b among edges of the first uncoated portion 171a. Referring to FIGS. 7 to 9, the end portion of the first uncoated portion 171a may mean an edge located at an upper portion of the first uncoated portion 171a.

Referring to FIG. 7, in some non-limiting embodiments or aspects, a length LF from the first coated portion 171b to one end of a respective one of the plurality of flags 185 may be the same. In some non-limiting embodiments or aspects, when the insulating coated portion 165 is formed between the first coated portion 171b and the first uncoated portion 171a, the length from the insulating coated portion 165 to one end of a respective one of the plurality of flags 185 may be the same.

In some non-limiting embodiments or aspects, each of the plurality of cut portions 183 may be formed by connecting straight lines, curved lines, or a combination thereof. The following description of one cut portion 183 may be applied to each of the plurality of cut portions 183.

In some non-limiting embodiments or aspects, the cut portion 183 may include side wall portions 1831. The side wall portion 1831 may mean a region extending from the outside to the inside of the first uncoated portion 171a. In some non-limiting embodiments or aspects, the cut portion 183 may further include a bottom portion 1832. The bottom portion 1832 may mean a region defined by extending the side wall portions 1831 to each other, or may mean a region located in the first uncoated portion 171a.

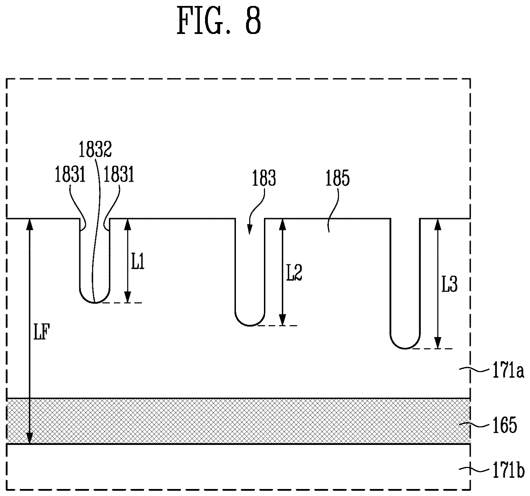

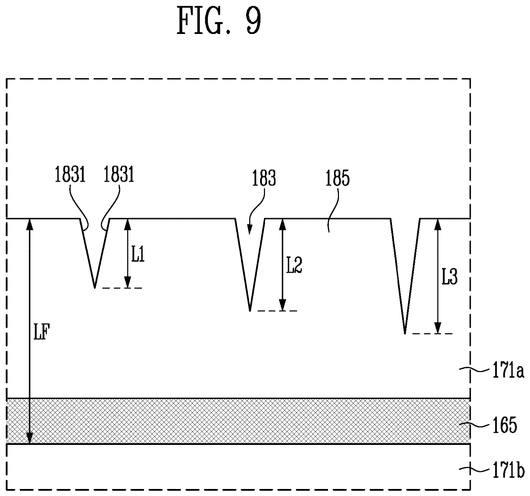

In some non-limiting embodiments or aspects, the side wall portion 1831 and the bottom portion 1832 may each be formed by a straight line or a curved line. When the side wall portion 1831 and the bottom portion 1832 each are formed by a straight line, the side wall portion 1831 and the bottom portion 1832 may intersect with each other. Referring to FIG. 7, the side wall portion 1831 and the bottom portion 1832 are formed by straight lines, and a bent portion may be formed in a rectangular shape. Referring to FIG. 8, the side wall portion 1831 may be formed by a straight line and the bottom portion 1832 may be formed by a curved line. Referring to FIG. 9, two side wall portions 1831 may intersect with each other to form a bent portion in a triangular shape.

In some non-limiting embodiments or aspects, the length of the cut portion 183 may mean a vertical length from one end of the cut portion 183 open to the outside to the other end of the cut portion 183 located in the first uncoated portion 171a. In some non-limiting embodiments or aspects, the length of the cut portion 183 may mean each of lengths L1, L2, and L3 from one end of a respective one of the plurality of flags 185 to the bottom portion 1832.

Referring to FIGS. 7 to 9, in some non-limiting embodiments or aspects, each of the lengths L1, L2, and L3 of the cut portion 183 may mean a length of the cut portion 183 in a direction in which the first coated portion 171b is located with respect to one end of a respective one of the plurality of flags 185.

Referring again to FIG. 7, in some non-limiting embodiments or aspects, the length L1, L2, or L3 of each of the plurality of cut portions 183 may increase as the distance from the winding center C increases in the inner region SI. The length L1, L2, or L3 of each of the plurality of cut portions 183 in the inner region SI may increase toward the outer circumferential direction.

Referring to FIG. 10, in some non-limiting embodiments or aspects, each of lengths L4, L5, and L6 of each of the plurality of cut portions 183 may decrease as the distance from the winding center C increases in the outer region SO. The length L4, L5, or L6 of each of the plurality of cut portions 183 in the outer region SO may decrease toward the outer circumferential direction.

In some non-limiting embodiments or aspects, the length of the cut portion 183 may continuously increase or incrementally increase. The length of the cut portion 183 may also continuously decrease or incrementally decrease.

In some non-limiting embodiments or aspects, the plurality of cut portions 183 may be grouped into the preset number of groups and divided into a plurality of cut groups. The lengths of the cut portions 183 belonging to the same cut group are the same, but the lengths of the cut portions 183 belonging to different cut groups may be different.

In some non-limiting embodiments or aspects, the plurality of cut portions 183 may be sequentially divided into a plurality of cut groups from a first cut group including the cut portions 183 each having a preset first cutting length, a second cut group including the cut portions 183 each having a preset second cutting length, and the like.

In some non-limiting embodiments or aspects, the cutting length of the cut portion 183 belonging to the cut group may increase as the distance from the winding center C increases in the inner region SI. In addition, the cutting length of the cut portion 183 belonging to the cut group may decrease as the distance from the winding center C increases in the outer region SO.

It is understood by those skilled in the art that the plurality of exemplary embodiments described above are specific examples of the following aspects.

Aspect 1: An electrode assembly, comprising: a first electrode, a second electrode, and a separator located between the first electrode and the second electrode, wherein the first electrode, the second electrode, and the separator are wound in a roll shape, wherein the first electrode comprises a first coated portion in which a first active material is coated on a first current collector, and a first uncoated portion adjacent to the first coated portion and formed at one side of the first current collector, wherein the first uncoated portion comprises a plurality of cut portions each open to an outside and a plurality of flags partitioned by the plurality of cut portions, and wherein a length of each of the plurality of cut portions increases in at least one or more sections in a radial direction from a winding center.

Aspect 2: The electrode assembly of Aspect 1, wherein a distance from the first coated portion to one end of each of the plurality of flags is the same in an axial direction of the winding center.

Aspect 3: The electrode assembly of Aspect 1 or 2, wherein a height of an end portion of each of the plurality of flags is the same.

Aspect 4: The electrode assembly of any one of Aspects 1 to 3, wherein the first uncoated portion comprises a first region located within a preset first radius from the winding center and a second region located outside the first region, and wherein, when any two cut portions are selected from among the plurality of cut portions in the first region, a length of a cut portion located close to the winding center is the same as or shorter than a length of a cut portion located far from the winding center.

Aspect 5: The electrode assembly of Aspect 4, wherein, when any two cut portions are selected from among the plurality of cut portions in the second region, a length of a cut portion located close to the winding center is the same as or longer than a length of a cut portion located far from the winding center.

Aspect 6: The electrode assembly of Aspect 4, wherein a length of a cut portion located in the first region increases as a distance from the winding center increases.

Aspect 7: The electrode assembly of Aspect 4, wherein a length of a cut portion located in the second region decreases as a distance from the winding center increases.

Aspect 8: The electrode assembly of any one of Aspects 1 to 7, wherein each of the plurality of cut portions is formed by connecting straight lines, curved lines, or a combination thereof.

Aspect 9: The electrode assembly of any one of Aspects 1 to 8, further comprising an insulating coated portion located between the first coated portion and the first uncoated portion.

Aspect 10: The electrode assembly of any one of Aspects 1 to 9, wherein a cutting direction of a cut portion of the plurality of cut portions is inclined with respect to an axial direction of the winding center, preferably, the cutting direction of a cut portion of the plurality of cut portions is parallel to the axial direction of the winding center.

Aspect 11: The electrode assembly of any one of Aspects 1 to 10, wherein a cut portion of the plurality of cut portions comprises at least one side wall portion, preferably, the at least one side wall portion comprises at least two side wall portions that intersect.

Aspect 12: The electrode assembly of Aspect 11, wherein the cut portion comprises a bottom portion, preferably, the bottom portion is formed by (a) a straight line that intersects the at least one side wall portion and/or (b) a curved line.

Aspect 13: A battery cell, comprising: an electrode assembly comprising: a first electrode, a second electrode, and a separator located between the first electrode and the second electrode, wherein the first electrode, the second electrode, and the separator are wound in a roll shape, wherein the first electrode comprises a first coated portion in which a first active material is coated on a first current collector, and a first uncoated portion adjacent to the first coated portion and formed at one side of the first current collector, wherein the first uncoated portion comprises a plurality of cut portions each open to an outside and a plurality of flags partitioned by the plurality of cut portions, and wherein a length of each of the plurality of cut portions increases in at least one or more sections in a radial direction from a winding center; a can receiving the electrode assembly; and a cap plate sealing the can.

Aspect 14: An electrode assembly, comprising: a first electrode, a second electrode, and a separator located between the first electrode and the second electrode, wherein the first electrode, the second electrode, and the separator are wound in a roll shape, wherein the first electrode comprises a first coated portion in which a first active material is coated on a first current collector, and a first uncoated portion adjacent to the first coated portion and formed at one side of the first current collector, wherein the first uncoated portion comprises a plurality of cut portions each open to an outside and a plurality of flags partitioned by the plurality of cut portions, and wherein a length of each of the plurality of cut portions of the first electrode before being wound increases in at least one or more sections in a direction from one end of the first electrode, which forms a winding center when wound, toward another end of the first electrode.

Aspect 15: The electrode assembly of Aspect 14, wherein the first uncoated portion comprises an inner region located within a preset threshold distance from the one end of the first electrode and an outer region located outside the inner region, and wherein, (a) when any two cut portions are selected from among the plurality of cut portions in the inner region, a length of a cut portion located close to the one end of the first electrode is the same as or shorter than a length of a cut portion located far from the one end of the first electrode, and/or (b) when any two cut portions are selected from among the plurality of cut portions in the outer region, a length of a cut portion located close to the one end of the first electrode is the same as or longer than a length of a cut portion located far from the one end of the first electrode.

Because the present disclosure may be implemented in various forms, the scope of the present disclosure is not limited to the above-described embodiments. The descriptions as set forth above are merely examples applying the principles of the present disclosure, and other configurations may be further included without departing from the scope of the present disclosure. For example, although embodiments have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect.

## Claims

1. An electrode assembly, comprising:
a first electrode, a second electrode, and a separator located between the first electrode and the second electrode,
wherein the first electrode, the second electrode, and the separator are wound in a roll shape,
wherein the first electrode comprises a first coated portion in which a first active material is coated on a first current collector, and a first uncoated portion adjacent to the first coated portion and formed at one side of the first current collector,
wherein the first uncoated portion comprises a plurality of cut portions each open to an outside and a plurality of flags partitioned by the plurality of cut portions, and
wherein a length of each of the plurality of cut portions increases in at least one or more sections in a radial direction from a winding center.

2. The electrode assembly of claim 1, wherein a distance from the first coated portion to one end of each of the plurality of flags is the same in an axial direction of the winding center.

3. The electrode assembly of claim 1 or 2, wherein a height of an end portion of each of the plurality of flags is the same.

4. The electrode assembly of any one of claims 1 to 3, wherein the first uncoated portion comprises a first region located within a preset first radius from the winding center and a second region located outside the first region, and
wherein, when any two cut portions are selected from among the plurality of cut portions in the first region, a length of a cut portion located close to the winding center is the same as or shorter than a length of a cut portion located far from the winding center.

5. The electrode assembly of claim **4,** wherein, when any two cut portions are selected from among the plurality of cut portions in the second region, a length of a cut portion located close to the winding center is the same as or longer than a length of a cut portion located far from the winding center.

6. The electrode assembly of claim 4, wherein a length of a cut portion located in the first region increases as a distance from the winding center increases.

7. The electrode assembly of claim 4, wherein a length of a cut portion located in the second region decreases as a distance from the winding center increases.

8. The electrode assembly of any one of claims 1 to 7, wherein each of the plurality of cut portions is formed by connecting straight lines, curved lines, or a combination thereof.

9. The electrode assembly of any one of claims 1 to 8, further comprising an insulating coated portion located between the first coated portion and the first uncoated portion.

10. The electrode assembly of any one of claims 1 to 9, wherein a cutting direction of a cut portion of the plurality of cut portions is inclined with respect to an axial direction of the winding center, preferably, the cutting direction of a cut portion of the plurality of cut portions is parallel to the axial direction of the winding center.

11. The electrode assembly of any one of claims 1 to 10, wherein a cut portion of the plurality of cut portions comprises at least one side wall portion, preferably, the at least one side wall portion comprises at least two side wall portions that intersect.

12. The electrode assembly of claim 11, wherein the cut portion comprises a bottom portion, preferably, the bottom portion is formed by (a) a straight line that intersects the at least one side wall portion and/or (b) a curved line.

13. A battery cell, comprising:
an electrode assembly comprising:
a first electrode, a second electrode, and a separator located between the first electrode and the second electrode,
wherein the first electrode, the second electrode, and the separator are wound in a roll shape,
wherein the first electrode comprises a first coated portion in which a first active material is coated on a first current collector, and a first uncoated portion adjacent to the first coated portion and formed at one side of the first current collector,
wherein the first uncoated portion comprises a plurality of cut portions each open to an outside and a plurality of flags partitioned by the plurality of cut portions, and
wherein a length of each of the plurality of cut portions increases in at least one or more sections in a radial direction from a winding center;
a can receiving the electrode assembly; and
a cap plate sealing the can.

14. An electrode assembly, comprising:
a first electrode, a second electrode, and a separator located between the first electrode and the second electrode,
wherein the first electrode, the second electrode, and the separator are wound in a roll shape,
wherein the first electrode comprises a first coated portion in which a first active material is coated on a first current collector, and a first uncoated portion adjacent to the first coated portion and formed at one side of the first current collector,
wherein the first uncoated portion comprises a plurality of cut portions each open to an outside and a plurality of flags partitioned by the plurality of cut portions, and
wherein a length of each of the plurality of cut portions of the first electrode before being wound increases in at least one or more sections in a direction from one end of the first electrode, which forms a winding center when wound, toward another end of the first electrode.

15. The electrode assembly of claim 14, wherein the first uncoated portion comprises an inner region located within a preset threshold distance from the one end of the first electrode and an outer region located outside the inner region, and
wherein, (a) when any two cut portions are selected from among the plurality of cut portions in the inner region, a length of a cut portion located close to the one end of the first electrode is the same as or shorter than a length of a cut portion located far from the one end of the first electrode, and/or (b) when any two cut portions are selected from among the plurality of cut portions in the outer region, a length of a cut portion located close to the one end of the first electrode is the same as or longer than a length of a cut portion located far from the one end of the first electrode.
